(19) Europäisches Patentamt European Patent Office Office européen des brevets

(11) **EP 4 693 818 A1**

(12) **EUROPEAN PATENT APPLICATION**
published in accordance with Art. 153(4) EPC

(43) Date of publication:
**11.02.2026 Bulletin 2026/07**

(21) Application number: **24779719.4**

(22) Date of filing: **19.03.2024**

(51) International Patent Classification (IPC):
*H02J 50/10* (2016.01)    *H02J 7/00* (2026.01)
*H02J 50/40* (2016.01)    *H02J 50/80* (2016.01)

(52) Cooperative Patent Classification (CPC):
**H02J 7/00; H02J 50/10; H02J 50/40; H02J 50/80**

(86) International application number:
**PCT/JP2024/010700**

(87) International publication number:
**WO 2024/203594 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.03.2023 JP 2023055505**

(71) Applicant: **DENSO CORPORATION**
**Kariya-city, Aichi 448-8661 (JP)**

(72) Inventors:
• **TAKAHASHI, Masaya**
  **Kariya-city, Aichi 448-8661 (JP)**
• **NAKAYASHIKI, Yusei**
  **Kariya-city, Aichi 448-8661 (JP)**
• **KANESAKI, Masaki**
  **Kariya-city, Aichi 448-8661 (JP)**
• **YAMAGUCHI, Nobuhisa**
  **Kariya-city, Aichi 448-8661 (JP)**
• **OBAYASHI, Kazuyoshi**
  **Kariya-city, Aichi 448-8661 (JP)**

(74) Representative: **TBK**
**Bavariaring 4-6**
**80336 München (DE)**

(54) **NON-CONTACT POWER RECEIVING DEVICE, NON-CONTACT POWER FEEDING SYSTEM, AND METHODS FOR SAME**

(57)     At least a part of AC power received by a power receiving coil (31) at a position where magnetic coupling with a power transmitting coil (51) is possible is supplied from a circuit (331) that functions as a current source to a load (45). At this time, an electrical characteristic of a current source in this circuit is detected, and switching between a first state of supplying a first current from the current source to the load and a second state of supplying a second current smaller than the first current from the current source to the load is performed to feedforward-control a ratio of the first state or the second state to one cycle of the AC power according to the detected electrical characteristic.

FIG.2

**Description**

[Cross Reference to Related Application]

The present application claims the benefit of priority from Japanese Patent Application No. 2023-055505 filed in Japan on March 30, 2023, all the contents of which are incorporated herein by reference.

[Technical Field]

The present disclosure relates to wireless power receiving and wireless power transfer.

[Background Art]

When wireless power transfer is performed, a technology to control a supply current may be necessary. For example, WO 2020/129178 A discloses a method of controlling a supply current by converting an alternating current received by magnetic coupling into a direct current and controlling, corresponding to a current flowing to a load, a current flowing to a capacitor on an output side to which this AC voltage is applied. In this case, a period during which the amount of a current flowing to the capacitor is zero is controlled in order to supply power in a desired current amount.

[Summary of the Invention]

However, such control of a period during which a current is zero is performed by feedback control in the technology described in the above-described literature, so that the responsiveness of the control may be insufficient. For example, when the amount of power transmitted from the transmission side is abruptly increased, control on the power receiving device side could not accommodate the increase, which might lead to excessive received power or deterioration of EMO at transition. When received power is excessive, an overcurrent to a battery or the like may occur, which has raised a problem that an additional configuration for preventing the overcurrent is required.

The present disclosure can be realized as the following forms or application examples.

[1] A wireless power receiving device of the present disclosure includes: a power receiving unit that includes a power receiving coil and receives AC power by magnetic coupling; a power unit that is connected to the power receiving unit and supplies, as a current source, power to a load; a detection unit that detects an electrical characteristic of the power unit as the current source; a current switching unit that switches the power unit between a first state of supplying a first current to the load and a second state of supplying a second current smaller than the first current to the load; and a control unit that determines a ratio of the first state or the second state to a cycle of the AC power according to the detected electrical characteristic and feedforward-controls the current switching unit according to the ratio.

[2] Further, a wireless power receiving method of the present disclosure includes: supplying at least a part of AC power received by a power receiving coil at a position where magnetic coupling with a power transmitting coil is possible, from a circuit that functions as a current source to a load; detecting an electrical characteristic of the current source in the circuit; and performing switching between a first state of supplying a first current from the current source to the load and a second state of supplying a second current smaller than the first current from the current source to the load, to feedforward-control a ratio of the first state or the second state to one cycle of the AC power according to the detected electrical characteristic.

[3] Further, a wireless power transfer method of the present disclosure includes: applying AC voltage at a predetermined frequency to a power transmitting coil that is present at a position where magnetic coupling with a power receiving coil is possible; supplying at least a part of AC power received by the power receiving coil at a position where magnetic coupling with the power transmitting coil is possible, from a circuit that functions as a current source to a load; detecting an electrical characteristic of the current source in the circuit; and performing switching between a first state of supplying a first current from the current source to the load and a second state of supplying a second current smaller than the first current from the current source to the load, to feedforward-control a ratio of the first state or the second state to one cycle of the AC power according to the detected electrical characteristic.

[Brief Description of the Drawings]

The above-described and other objects, features, and advantages of the present disclosure will become clearer from the following detailed description with reference to the accompanying drawings. The drawings are as follows.

Fig. 1 is a schematic configuration diagram illustrating a wireless power transfer system of an embodiment.
Fig. 2 is a schematic configuration diagram of a power transmitting device and a power receiving device which constitute a wireless power transfer system.
Fig. 3 is an explanation diagram illustrating configuration examples of a power source unit.
Fig. 4 is an explanation diagram illustrating a relationship between an action state of a current switching unit and a state of a load current.

Fig. 5 is a configuration diagram illustrating a first embodiment of a power receiving device.

Fig. 6A is an explanation diagram illustrating a difference of an on-time due to on/off of a current switching unit.

Fig. 6B is a schematic diagram schematically illustrating a relationship of an on-time with an output current and a load current.

Fig. 7 is an explanation diagram illustrating a behavior of a load current by feedforward control when a received current increased.

Fig. 8A is a configuration diagram illustrating an embodiment of a power receiving device used in a second embodiment.

Fig. 8B is an explanation diagram illustrating a control example in which a feedforward control amount is incremented when a received current abruptly increased.

Fig. 9A is a configuration diagram illustrating a power receiving device used in a third embodiment.

Fig. 9B is a flowchart illustrating control processing of a synchronous rectifier in the third embodiment.

Fig. 10 is a configuration diagram illustrating a power receiving device used in a fourth embodiment.

Fig. 11 is a configuration diagram illustrating a power receiving device used in a fifth embodiment.

Fig. 12 is a configuration diagram illustrating a modified example of the fifth embodiment.

Fig. 13 is a configuration diagram illustrating a power receiving device used in a sixth embodiment.

[Description of the Embodiments]

A. First embodiment:

(A1) Entire configuration of wireless power transfer system:

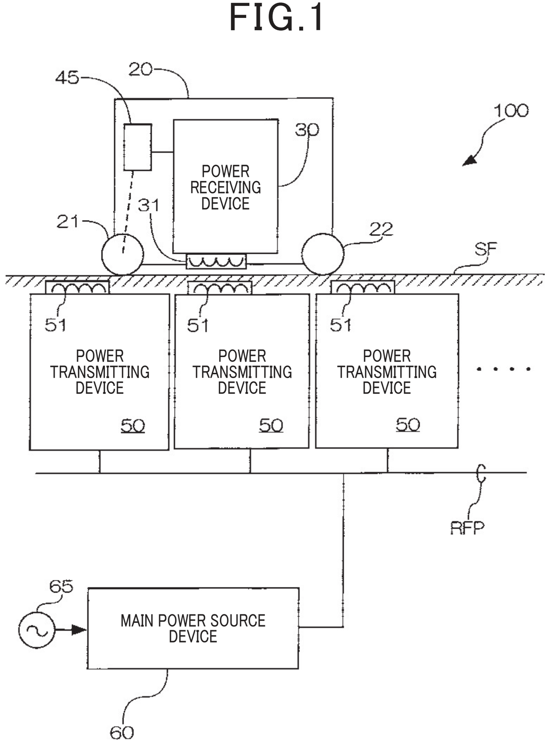

Fig. 1 illustrates a schematic configuration of a wireless power transfer system 100 including a wireless power receiving device 30 of a first embodiment. As illustrated, this wireless power transfer system 100 includes a plurality of power transmitting devices 50 buried in the ground under a road surface SF and the wireless power receiving device 30 mounted on a mobile object 20 that drives autonomously on the road surface SF. The mobile object 20 includes: a drive wheel 21 that is driven by an unillustrated motor contained in a load device 45; a driven wheel 22 that supports, together with the drive wheel 21, the mobile object 20 so as to be movable on the road surface SF; a power receiving coil 31 disposed under the floor of the mobile object 20; and the like. The power receiving coil 31 is supplied with AC power by being magnetically coupled with a power transmitting coil 51 of the power transmitting device 50 prepared on the road surface SF side and supplies power to the load device 45. Note that the power transmitting device 50 and the wireless power transfer system 100 including the power transmitting device 50 are not limited to those that supply power to the wireless power receiving device 30 of the mobile object 20. As long as it is a device that performs wireless power transmission and a system that performs wireless power transfer, the device or system may supply power to a power receiving device for a non-mobile object, such as a portable terminal. The mobile object 20 is not limited to one that runs on an outdoor road and includes a carrier used in an indoor place such as a factory or a hospital. The number of wheels of the mobile object 20 is optional, and a method other than a wheel, for example, magnetic suspension, may be used for movement.

Other than the configuration in which the power transmitting device 50 is buried under the road surface SF, the power transmitting device 50 can be placed on a road surface, a wall surface, and a ceiling. In such cases, the wireless power receiving device 30 may be disposed at a predetermined position within the mobile object 20 corresponding to the location where the power transmitting device 50 is placed. For example, when the power transmitting device 50 is laid on a wall surface, the wireless power receiving device 30 may be disposed on the side surface of the mobile object 20. Further, the wireless power receiving device 30 may be moved within the mobile object 20, or a plurality of the wireless power receiving devices 30 previously prepared may be switched in use, according to a position where the power transmitting device 50 is laid.

In the present embodiment, the plurality of power transmitting devices 50 that supply power to the wireless power receiving device 30 of the mobile object 20 has the same configuration and is arranged along the movement path of the mobile object 20. Of course, the power transmitting devices 50 may be two-dimensionally arranged on the road surface SF, instead of along the movement path of the mobile object 20. Each of the power transmitting devices 50 is connected to a common main power line RFP. AC power at a high frequency (for example, 85 KHz) of frequency f1 is supplied from a main power source device 60 to the main power line RFP. Although the power transmitting devices 50 have the same configurations in the present embodiment, the configurations may not be the same as long as transmission is possible. For example, power transmitting coils 51 having different sizes may be alternately disposed. Of course, the power transmitting device 50 may be singly disposed.

The main power source device 60 is supplied with an alternating current at a low frequent (for example, 60 Hz) from a main power source 65 and converts the alternating current into an alternating current at a high frequency. A known configuration of the main power source device 60 is, for example, that a noise filter for outputting an alternating current, a PFC circuit, an inverter, and a filter are provided from a side that receives power from the main power source 65. The power supplied from the main power source 65 is converted into an alternating current at the above-described frequency by an inverter and outputted to the main power line RFP.

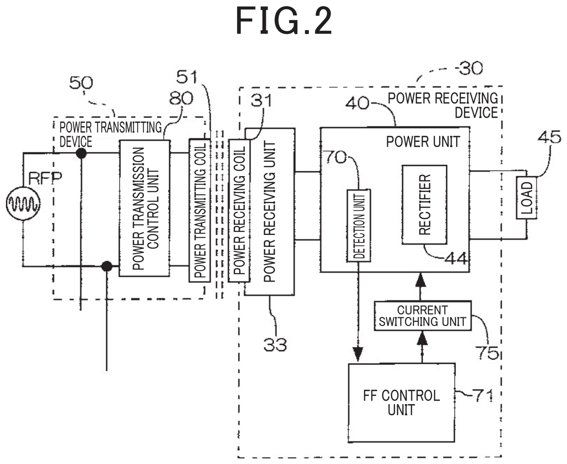

Fig. 2 illustrates a schematic configuration of the power transmitting device 50 and the wireless power receiving device 30. The drawing illustrates a state in which one of the plurality of power transmitting devices 50 transmits power to the wireless power receiving device 30 of the mobile object 20. At this time, the power transmitting coil 51 of the power transmitting device 50 is magnetically coupled with the power receiving coil 31 of the wireless power receiving device 30, and an induction current (alternating current) flows through the power receiving coil 31 in response to power being transmitted from the power transmitting device 50. The wireless power receiving device 30 includes a power receiving unit 33, a detection unit 70, a power unit 40, a current switching unit 75, and an FF control unit 71, and supplies necessary power to the load device 45. The power receiving unit 33 receives power from the power transmitting device 50 side by an induction current generated in the power receiving coil 31. The power unit 40 includes a circuit configuration that functions as a current source, and further includes a rectifier 44 that rectifies AC power received by the power receiving unit 33. Examples of the rectifier 44 to be used include a full-wave rectifier using a diode bridge, a half-wave rectifier, and a synchronous rectifier that performs rectification using a switching element in a part of a bridge and turning on and off the switching element in synchronization with the alternation of an inputted alternating current.

The detection unit 70 detects an electrical characteristic of a circuit functioning as a current source of the power unit 40. In this embodiment, the detection unit 70 detects a current value Iout outputted from a circuit functioning as a current source. Although the configuration of the circuit functioning as a current source will be described in detail later, a voltage value equivalent to a current value may be detected as the electrical characteristic because of the circuit configuration. The current switching unit 75 performs switching between a first state of supplying a first current to a load and a second state of supplying a second current smaller than the first current to a load. The specific configuration of the current switching unit 75 will also be described in detail later. This switching between the first state and the second state by the current switching unit 75 is controlled by the FF control unit 71. The FF control unit 71 is configured as a control device to perform feedforward control. The feedforward control performs control of bringing a control object (here, a current value Id flowing to the load device 45) closer to a target value I*. In general, feedback control is performed for bringing a control amount closer to a target value. In the feedback control, an input side (here, an output current value Iout from the power receiving unit 33) is controlled corresponding to a difference between a target value and a control amount. On the other hand, the FF control unit 71 of the present embodiment controls the current switching unit 75 corresponding to the value of the output current value Iout, before the load current value Id to the load device 45 changes. Details of such control will also collectively described later. The FF control unit 71 can be realized by a discrete circuit configuration, but is also easily realized by arithmetic logic operation by a computer that executes a program stored in a memory.

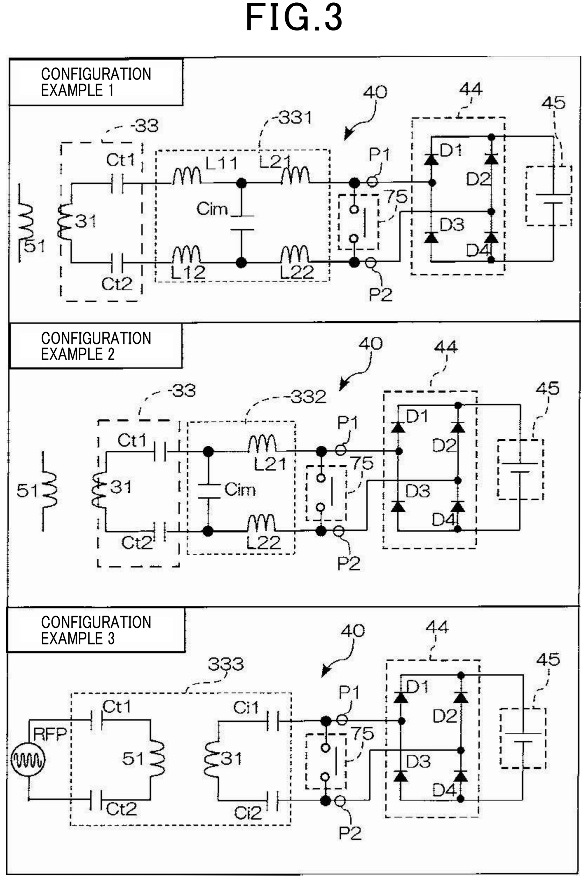

Configuration examples of components constituting the wireless power receiving device 30 will be sequentially described. Fig. 3 illustrates configuration examples of the power receiving unit 33 and the power unit 40. In the illustrated configuration examples, a current source circuit 331 (here, an immittance filter) which has an immittance characteristic when the power unit 40 functions as a current source is incorporated. In Configuration Example 1, the power receiving unit 33 includes the power receiving coil 31 and two resonance capacitors Ct1 and Ct2 connected to both sides of the power receiving coil 31. The current source circuit 331 as an immittance filter is disposed to a stage subsequent to this power receiving unit 33. The immittance filter of Configuration Example 1 has a T-LCL type configuration and includes one immittance capacitor Cim and two pairs of reactors L11 and L12 and reactors L21 and L22 connected to both sides of the immittance capacitor Cim in such a manner as to sandwich the immittance capacitor Cim. Of course, other than the T-LCL type, a $\pi$-CLC or T-LCLC type immittance filter can also be used.

In Configuration Example 1, the current switching unit 75 is disposed to a stage subsequent to the current source circuit 331 using an immittance filter, and the rectifier 44 is further connected to the output side of the current source circuit 331. In Configuration Example 1, the rectifier 44 is configured as a full-wave rectifier constituted by bridge-connected four diodes D1 to D4. An alternating current outputted from the current source circuit 331 is converted into a direct current by the rectifier 44, and the direct current is supplied to the load device 45 and charges, for example, a battery contained in the load device 45. The current switching unit 75 is configured as a contact point in which two power lines P1 and P2 of the current source circuit 331 are short-circuited. The contact point of the current switching unit 75 is driven by the FF control unit 71.

The immittance filter to function as a current source circuit may include all the reactors L11 to L22 constituting a circuit therein as in Configuration Example 1, but may also be configured not to include the reactors L11 and L12 at a side connected to the power receiving unit 33 as illustrated in Configuration Example 2. This current source circuit 332 also functions similarly to Configuration Example 1. Furthermore, as illustrated in Configuration Example 3, a circuit configuration including the power transmitting coil 51 and the resonance capacitors Ct1 and Ct2 as well as a power receiving coil 31 and resonance capacitors Ci1 and Ci2 may be used as a current source circuit 333 having the immittance characteristic. This current source circuit 333 also functions similarly to Configuration Examples 1 and 2.

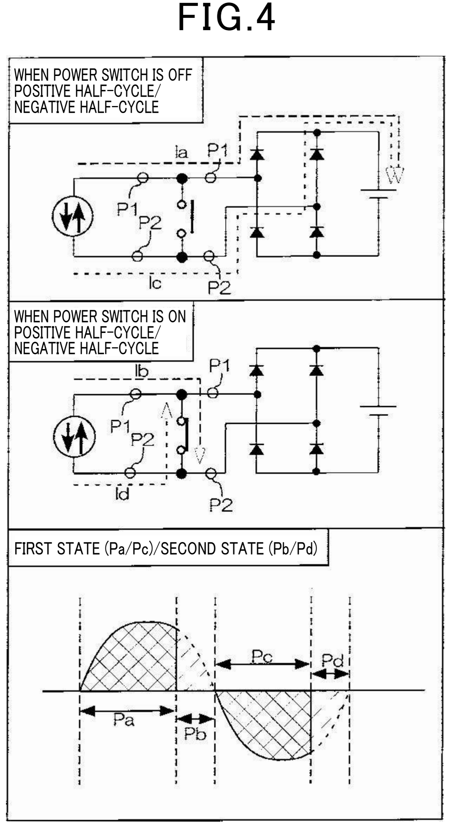

Fig. 4 illustrates that power supplied from an AC current source such as the current source circuit 331 is supplied as a direct current to the load device 45. When the current switching unit 75 is in an off state, and the power line P1 is plus (positive half-cycle) by power supplied by the current source circuit 331, a current flows to the load device 45 as indicated by an illustrated broken line Ia. On the other hand, when the power line P2 is plus (negative half-cycle) by power supplied by the current source circuit 331, a current flows to the load device 45 as indicated by an illustrated broken line Ic. Further, when the current switching unit 75 is in an on state, a current is short-circuited between the power lines P1 and P2, and a current supplied by the current source circuit 331 flows through the current switching unit 75 and does not flow to the rectifier 44 side as indicated by illustrated broken lines Ib and Id. Therefore, the load device 45 is, of course, also not supplied with power.

When such on and off of the current switching unit 75 are switched during the half-cycle of the alternating current of the current source circuit 331, first states Pa and Pc in which power is supplied to the load device 45 through the rectifier 44 and second states Pb and Pd in which power is not supplied occur during one cycle of the alternating current as illustrated in the bottom of Fig. 4. Power supplied to the load device 45 increases or decreases according to the ratio of the section of the first state in the section of one cycle of the alternating current. The sections Pa and Pc of the first state and the sections Pb and Pd of the second state are equivalent to the time of the first state and the time of the second state on the time axis. The power amount supplied to the load device 45, specifically the current amount supplied to the load device 45, can be controlled by controlling the ratio of a time Ton of the section of the first state to one cycle Tt of the alternating current.

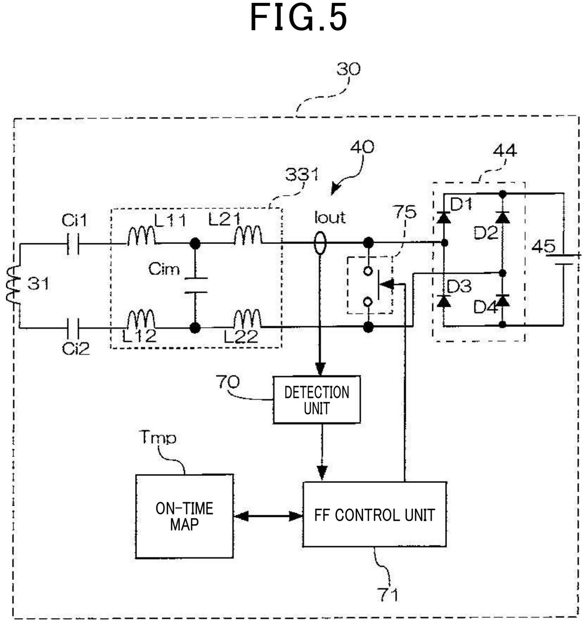

Therefore, as illustrated as an example in Fig. 5, the present embodiment employs a configuration which includes the detection unit 70 for detecting the output current Iout of the current source circuit 331 such that the FF control unit 71 feedforward-controls the on and off of the current switching unit 75 based on this output current Iout. In response to receiving the output current Iout from the detection unit 70, the FF control unit 71 refers to an on-time ratio map Tmp to acquire the ratio of the on-time Ton during which the current switching unit 75 is to be switched on. The ratio of the on-time Ton to be taken for the output current Iout is previously stored in the on-time ratio map Tmp. The on-time Ton may be determined by a mathematical formula or a function, instead of a map.

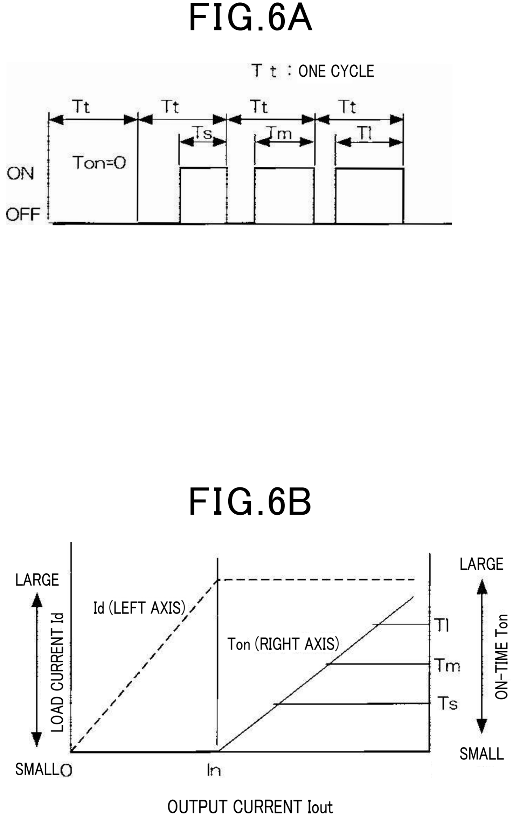

Fig. 6A illustrates an example of the ratio of the on-time Ton. The top of the drawing illustrates an example in which one cycle Tt of an alternating current is constant, and the time ratio during which the current switching unit 75 is to be switched on in the cycle changes. In this example, Ton = 0 indicates that there is no on-time Ton, and Ts, Tm, and Tl indicate that the on-time Ton is gradually lengthened. Fig. 6B correspondingly illustrates the ratio of the on-time Ton to the output current Iout on the right axis and the load current Id supplied to the load device 45 at this time on the left axis. Until the output current Iout reaches a predetermined value In, the on-time Ton is 0, and the current switching unit 75 is always maintained off. Therefore, the transmission amount from the power transmitting device 50 increases, and the load current Id increases with an increase of the output current Iout.

When the output current Iout exceeds the predetermined value In, the on-time Ton, which is the value of the on-time ratio map Tmp based on the output current Iout by the FF control unit 71, gradually increases. Accordingly, as illustrated as an example in the top of the drawing, the time Ton during which the current switching unit 75 is switched on increases as follows: $0 \rightarrow Ts \rightarrow Tm \rightarrow Tl$. With an increase in the on-time Ton, the current switching unit 75 is switched on, the sections Pb and Pd illustrated in the bottom of Fig. 4 increase, and the power amount outputted to the load device 45 through the rectifier 44 decreases.

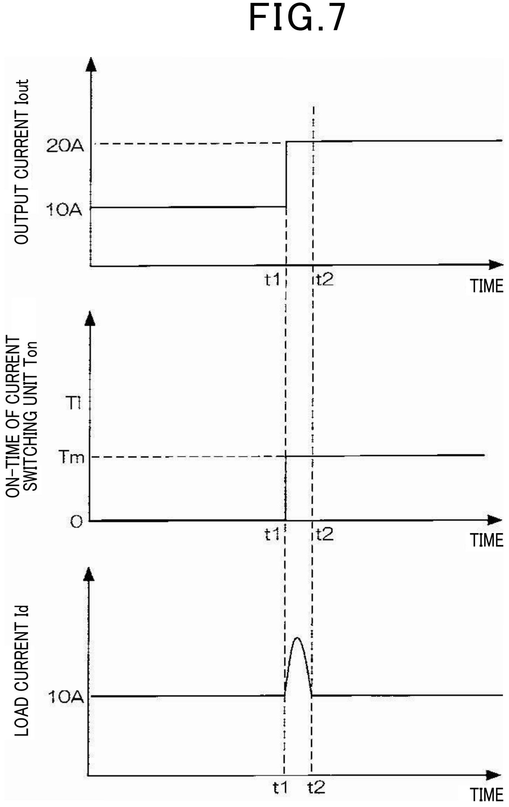

When the wireless power receiving device 30 is actually supplied with wireless power from the transmission device 50, the output current Iout outputted by the power receiving unit 33 can abruptly change due to, for example, a change in the positional relationship between the power transmitting coil 51 and the power receiving coil 31. As an example of the abrupt change of the output current Iout, Fig. 7 illustrates control by the present embodiment based on an assumption of step response.

When the current value to be outputted to the load device 45 is assumed to be 10 A, and the on-time Ton of the current switching unit 75 is feedback-controlled using the load current Id such that the load current Id becomes the target current I* (here, 10 A) when the output current Iout outputted from the current source circuit 331 changes from 10 A to 20 A at time t, considerable time is required until the load current Id becomes the target current I*, because of the nature of feedback control. When the gain of feedback control is increased in an attempt to enhance responsiveness, control becomes unstable, and an overshoot or an undershoot is likely to occur.

On the other hand, when the output current Iout abruptly increases from 10 A, the on-time Ton is accordingly increased to a prescribed on-time Tm by referring to the on-time ratio map Tmp in the present embodiment, as illustrated in Fig. 7. Therefore, the load current Id returns to the target current I* (here, 10 A) in a short time. In this example, the output current Iout and the on-time Ton are in a simple proportional relation, so that an overshoot appears in the output current Iout in a period from time t1 immediately after the output current Iout changed to t2, but such an overshoot disappears in a short time, and the output current Iout converges to the target current I* at and after time t2. Since the FF control unit 71 acquires the on-time Ton by referring to the on-time ratio map Tmp, a difference does not need to be calculated unlike in feedback control, and the control amount (here, on-time Ton) can be quickly switched.

B. Second embodiment:

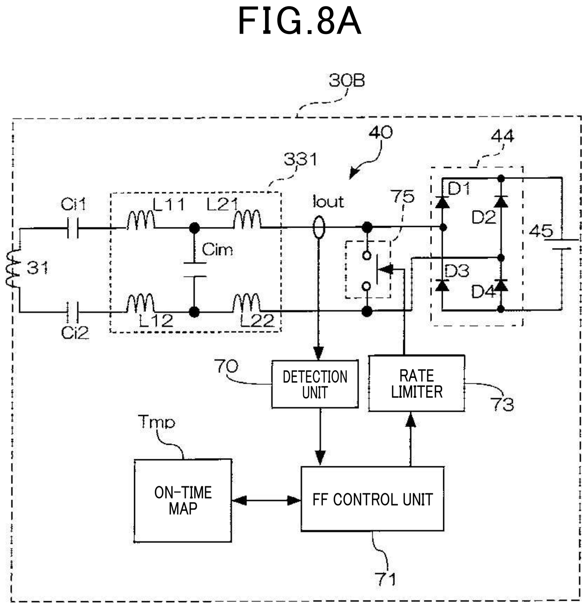

Fig. 8A illustrates a schematic configuration of a wireless power receiving device 30B used in a wireless power transfer system of a second embodiment. The wireless power receiving device 30B of the second embodiment differs from the wireless power receiving device 30 of the first embodiment, in that it includes a rate limiter 73, and the on-time Ton used by the FF control unit 71 when the output current Iout abruptly increases differs. Otherwise, the second embodiment is the same as the first embodiment.

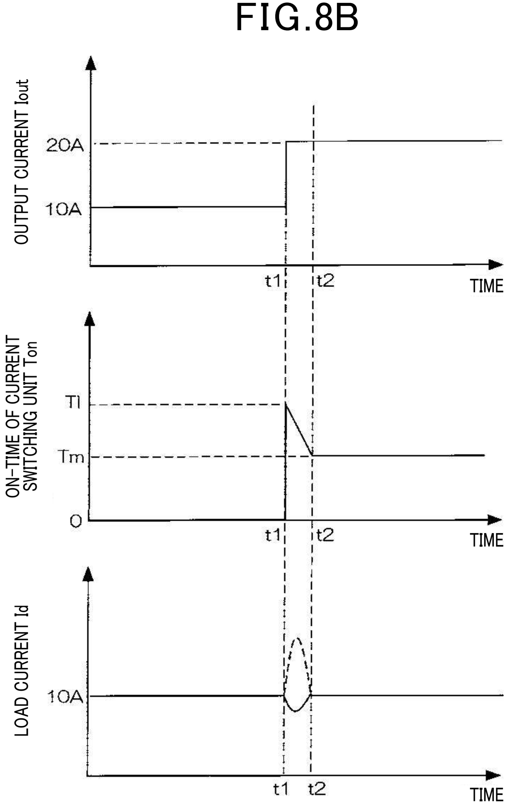

In the wireless power receiving device 30B of the second embodiment, the FF control unit 71 acquires the on-time Ton from the on-time ratio map Tmp such that when the output current Iout changes to exceed a predetermined threshold, the on-time Ton is not simply set to a value proportional to the output current Iout and is further incremented as illustrated in Fig. 8B. In the illustrated example, the on-time Ton once increases to on-time Tl during a period from time t1 immediately after the output current Iout abruptly changed to t2. Furthermore, when the on-time Ton is thereafter decreased to on-time Tm, the on-time Ton is gradually decreased at a certain rate by the rate limiter 73. The rate limiter 73 does not function when the on-time Ton increases, and adjusts the decrease ratio of the on-time Ton so as not to become a predetermined rate or less when the on-time Ton decreases.

This can suppress an overshoot of the load current Id even when the output current Iout abruptly changed. In the illustrated example, the load current Id is likely to be prevented from taking the behavior of abruptly increasing in a temporal manner as indicated by a broken line. Furthermore, the once increased on-time Tl is decreased such that the decrease ratio is not excessive, so that the occurrence of an overshoot can be sufficiently suppressed. When an overshoot does not occur, an overcurrent does not flow to the load device 45 such as a battery, so that the life of the battery or the like is easily prevented from being shortened by the overcurrent.

C. Third embodiment:

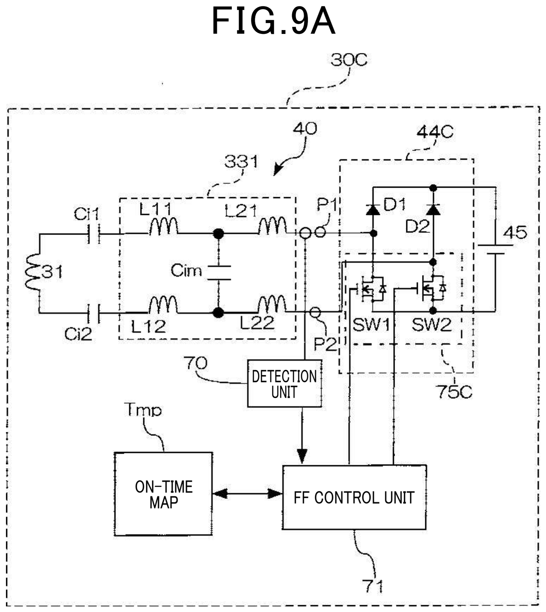

Fig. 9A illustrates a configuration of a wireless power receiving device 30C constituting a wireless power transfer system of a third embodiment. The wireless power receiving device 30C of this embodiment differs from the wireless power receiving device 30 of the first embodiment in terms of the configuration of the rectifier. The third embodiment is the same as the first embodiment, except that the rectifier is configured as a synchronous rectifier 44C and is partly used as a current switching unit 75C. In the synchronous rectifier 44C, two diodes D1 and D2 of the upper arm and two switching elements SW1 and SW2 of the lower arm form a bridge, as illustrated. The rectifier is the synchronous rectifier 44C, and a rectification action is performed by exclusively turning on and off the switching element SW1 and the switching element SW2 every time the polarity of the alternating current received by the power unit 40 alternates. As a result, the synchronous rectifier 44C functions as a full-wave rectifier and supplies power to the load device 45 by a direct current, as illustrated in the top of Fig. 4.

Furthermore, in response to the FF control unit 71 simultaneously turning on (conducted state) the two switching elements SW1 and SW2 constituting the lower arm connected to the power line P2, the power lines P1 and P2 become in a conducted state by these switching elements SW1 and SW2. In this case, the two switching elements SW1 and SW2 function as a current switching unit. As a result, as illustrated in the middle of Fig. 4, the switching elements SW1 and SW2 of the synchronous rectifier 44C function as a current switching unit, and power is not supplied to the load device 45. Therefore, when the two switching elements SW1 and SW2 of the synchronous rectifier 44C are turned on by the FF control unit 71 in both the positive half-cycle and the negative half-cycle of the alternating current, a current does not flow to the load device 45 side during the period (middle of Fig. 4, sections Pb and Pd).

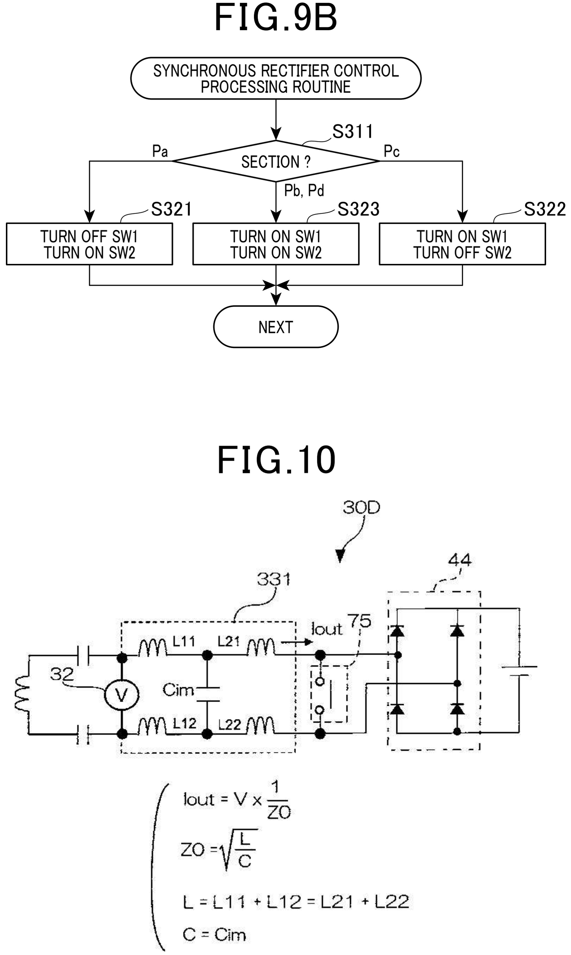

Fig. 9B illustrates a control processing routine of the synchronous rectifier 44C repeatedly executed by the FF control unit 71. In this processing executed at a predetermined interval, the FF control unit 71 firstly determines, as illustrated, which of the sections Pa to Pd illustrated in the bottom of Fig. 4 the section belongs to, from the behavior of the alternating current outputted by the power unit 40 (step S311). When it is determined that the section belongs to section Pa, the switching element SW1 is turned off, and the switching element SW2 is turned on (step S321). Accordingly, a current Ia of a positive half-cycle flows from the diode D1 into the load device 45, and returns to the power unit 40 via the switching element SW2.

On the other hand, when it is determined that the section is the section Pc illustrated in the bottom of Fig. 4 from the behavior of the alternating current outputted by the power unit 40, the switching element SW1 is turned on, and the switching element SW2 is turned off (step S322). Accordingly, a current Ic of a negative half-cycle flows from the switching element SW2 into the load device 45 and returns to the power unit 40 via the diode D2.

Further, when it is determined that the section is the section Pb or the section Pd illustrated in the bottom of Fig. 4 from the behavior of the alternating current outputted by the power unit 40, both the switching element SW1 and the switching element SW2 constituting the current switching unit 75C are turned on (step S323). Accordingly, the output current of the power unit 40 returns to the power unit 40 via the switching elements SW1 and SW2, and is not supplied to the load device 45.

In the above-described wireless power receiving device 30C of the third embodiment, the same working effects as the first embodiment are exerted, and the rectifier 44 also functions as the current switching unit 75C, so that the device configuration can be simplified. The switching elements SW1 and SW2 may be provided to the upper arm instead of the lower arm. In the synchronous rectifier 44C, at least one of the elements constituting the bridge can be constituted by a switching element. In this case, the synchronous rectifier 44C can also function as the current switching unit 75C when two elements connected to one of the lower arm and the upper arm are both a switching element. Of course, when a current is decreased only in a half-wave, one switching element may be used as a current switching unit.

D. Fourth embodiment:

Fig. 10 illustrates a main part of a configuration of a wireless power receiving device 30D of a fourth embodiment. The fourth embodiment differs from other embodiments in that the magnitude of the alternating current outputted by the power unit 40 is measured by the detection unit 70 in other embodiments, whereas an input-side voltage V of the power unit 40 measured by a voltmeter 32 is used to adjust the output of the current from the power unit 40 to the load device 45 in the fourth embodiment. As illustrated, the output current Iout of the power unit 40 and the input-side voltage V can be mutually calculated using a reactance L and a capacitance C of the current source circuit 331 as an immittance filter. That is, the output current Iout and the input voltage V have a relationship of the following formula (1):

$$\text{Iout} = \text{V/Z0} \qquad (1)$$

The impedance Z0 is obtained by the following formula (2) from the reactances L11 to L14 of the four reactors constituting the current source circuit 331 and the capacitance Cim of the immittance capacitor Cim:

$$\text{Z0} = \sqrt{(\text{L/Cim})} \qquad (2)$$

in which, L = L11 + L12 = L21 + L22

Therefore, it is easy to determine the output current Iout by measuring the input voltage of the power unit 40, and it is easy to feedforward-control the ratio at which the FF control unit 71 turns the current switching unit 75C to an on state thereby controlling the output current Iout to a predetermined range. Note that the control may be performed by obtaining the output current Iout from the input voltage V using the above-described formula, but AC power supplied to the load device 45 can be controlled without inconvenient conversion by preparing the on-time ratio map Tmp as a table for obtaining the ratio of the on-time Ton to the input voltage. It is unnecessary to say that this embodiment exerts the same working effects as the above-described other embodiments.

E. Fifth embodiment:

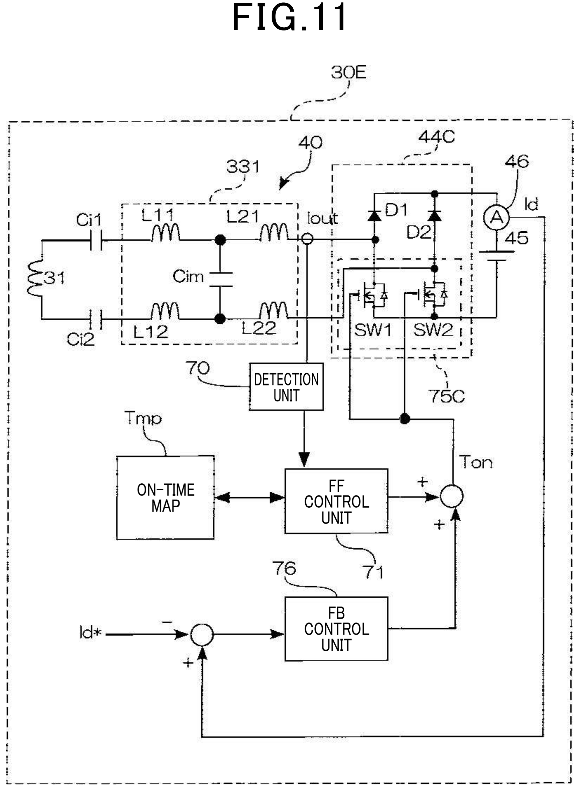

Next, a wireless power receiving device 30E in a wireless power transfer system of a fifth embodiment will be described. The wireless power receiving device 30E of this embodiment includes, as illustrated in Fig. 11, an ammeter 46 that detects the load current Id flowing to the load device 45 and an FB control unit 76 that performs feedback control, to the device configuration of the wireless power receiving device 30C (see Fig. 9) of the third embodiment. The wireless power receiving device 30E of this embodiment performs the same control as the third embodiment, but also reduces the steady-state deviation from a target current value occurring in a current flowing to the load due to the feedforward control by the FF control unit 71 by the feedback control of the FB control unit 76.

Specifically, as illustrated, the load current Id flowing to the load device 45 is detected by the ammeter 46, a deviation with a target current Id* is inputted to the FB control unit 76, and an adjusted on-time ΔTon corresponding to this deviation is added to the output of the FF control unit 71. As the load current Id increases and becomes larger than the target current Id*, the adjusted on-time ΔTon as the output of the FB control unit 76 increases, resulting in an increase of the on-time Ton of the current switching unit 75C. As a result, in response to the output current Iout changing, the ratio of the on-time Ton is firstly adjusted by the feedforward control by the FF control unit 71. In response to a deviation from the target current Id* occurring in the load current Id as a result of this feedforward control, the adjusted on-time ΔTon is accordingly added due to the feedback control by the FB control unit 76, and the load current Id is adjusted toward the target current Id*.

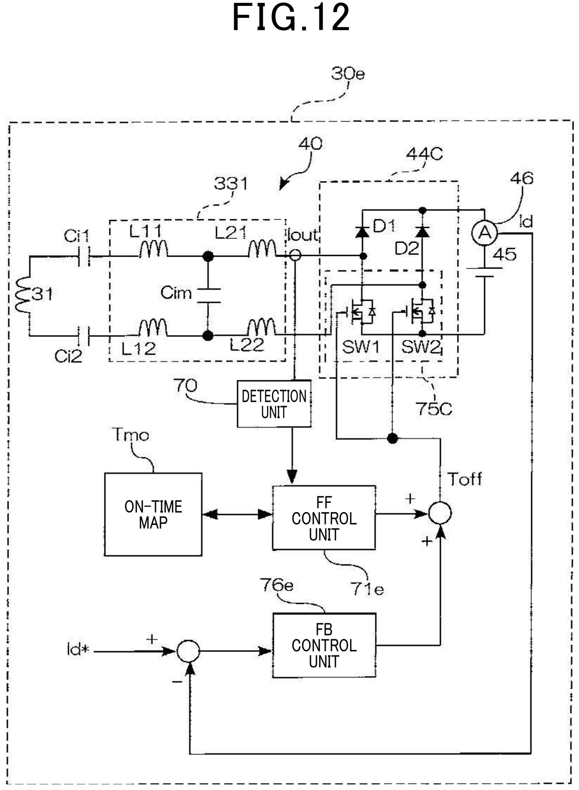

According to the above-described fifth embodiment, quick control by feedforward control and highly accurate adjustment to the target current by feedback control can be both achieved. Note that although the on-time Ton is adjusted to feedback-control the load current Id in this embodiment, an off-time Toff (time obtained by reducing the on-time Ton from the one cycle Tt) of the current switching unit may be adjusted as illustrated as a modified example of Fig. 12. In this wireless power receiving device 30e, an adjusted off-time ΔToff corresponding to a deviation between the load current Id and the target current Id* is added to the output of an FF control unit 71e. A difference is calculated such that as the load current Id increases and becomes larger than the target current Id*, the adjusted off-time ΔToff as the output of an FB control unit 76e decreases. As a result, in response to the output current Iout changing, the FF control unit 71e firstly performs feedforward control by referring to an off-time ratio map Tmo so that the ratio of the off-time Toff is adjusted. In response to a deviation from the target current Id* occurring in the load current Id as a result of this feedforward control, the adjusted off-time ΔToff is accordingly added due to the feedback control by the FB control unit 76e, and the load current Id is adjusted toward the target current Id*.

## F. Sixth embodiment:

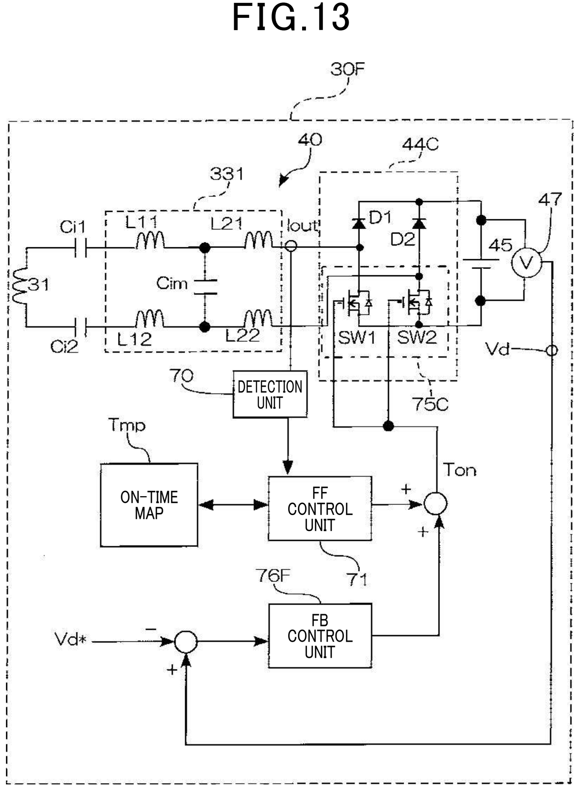

A wireless power receiving device 30F in a sixth embodiment performs feedback control by an FB control unit 76F in addition to feedforward control by the FF control unit 71 as illustrated in Fig. 13 in the same manner as the fifth embodiment, and the feedback control by the FB control unit 76F is performed to adjust the on-time Ton such that a voltage Vd applied to the load device 45 becomes a target voltage Vd*. The voltage Vd applied to the load device 45 is detected by a voltmeter 47. In this manner, interference by two controls can be prevented to produce a control system by feedforward-controlling the current outputted to the load device 45 and feedback-controlling the voltage Vd. Of course, the same working effects as the fifth embodiment can be exerted.

## G. Other embodiments:

(1) The below-described configuration of a wireless power receiving device can be adopted as another embodiment of the present disclosure. This wireless power receiving device includes: a power receiving unit that includes a power receiving coil and receives AC power by magnetic coupling; a power unit that is connected to the power receiving unit and supplies, as a current source, power to a load; a detection unit that detects an electrical characteristic of the power unit as the current source; a current switching unit that switches the power unit between a first state of supplying a first current to the load and a second state of supplying a second current smaller than the first current to the load; and a control unit that determines a ratio of the first state or the second state to a cycle of the AC power according to the detected electrical characteristic and feedforward-controls the current switching unit according to the ratio. Since this allows the ratio of the first state or the second state to the alternating current cycle to be controlled by feedforward control according to the detected electrical characteristic, control of power supply to the load can be quickly realized. Since this wireless power receiving device is configured that the power unit serves as the current source, the current switching unit can easily switch the supply of a current between the first current and the second current. Note that feedforward control of the ratio of the first state or the second state in the alternating current cycle may be performed in both or only one of the positive half-wave and the negative half-wave of the full-wave in the alternating current cycle.

The second current only has to be smaller than the first current, and may be 0. The second current can have a current value larger than 0 in the following manner. In the first embodiment, a current is short-circuited between the power lines P1 and P2 in response to the contact point of the current switching unit 75C being turned on. However, when a current smaller than the short-circuited current is allowed to flow between the power lines P1 and P2 via a predetermined impedance, instead of a current being short-circuited, the difference current can be supplied to the load. In either case, the range of a current supplied to the load comes to be from the second current to the first current. Therefore, the magnitudes of the first current and the second current only have to be determined corresponding to a control range necessary for the load. In the above-described first to sixth embodiments, this ratio as the on-time Ton that is the ratio of the second state to the cycle of AC power has been the target of feedforward control. However, for example, for increasing or decreasing a current supplied to the load according to the electrical characteristic as the current source, one of the control for decreasing or increasing the ratio of the first state and the control for increasing or decreasing the ratio of the second state only has to be performed. Both of these are equivalent. Note that the state of the power unit can be other than the first and second states. For example, the value of the second current in the second state may not be 0 with a third state having a current value of 0, and the current switching unit may perform switching among these three states. The current switching unit can additionally perform switching into the third state as long as it can perform at least switching between the first state of supplying the first current to the load and the second state of supplying the second current smaller than the first current to the load.

(2) In the above-described configuration of (1), the power unit may include a circuit having an immittance characteristic as the current source. This allows a current source to be easily configured. An example of the circuit having the immittance characteristic is, other than a T-LCL type including the four reactors L11 to L22 and the capacitor Cim described as an example in the first to sixth embodiments, a π-CLC type or T-LCLC type immittance filter. Another example is a configuration using an inverter, other than the circuit having the immittance characteristic.

(3) In the above-described configuration of (1) or (2), the detection unit may be a current detection circuit that detects the electrical characteristic using an output current of the circuit having the immittance characteristic. This facilitates switching of the current switching unit. The output current may be an effective value or may be a peak value or the like. Of course, the detection object may be other than the output current as long as it is the electrical characteristic of the power unit as the current source, and is not particularly limited as long as it can be used for controlling a current flowing to the load. For example, it can be an input voltage of the power unit equivalent to an output current, as long as the circuit having the immittance characteristic is used as the current source.

(4) In the above-described configurations of (1) to (3), the control unit may previously prepare a correspondence relationship between the electrical characteristic and the ratio and perform the feedforward control based on the detected electrical characteristic according to the ratio determined using the correspondence relationship. Since this allows the ratio of the first state to the cycle of the AC power to be controlled by the detected electrical characteristic according to the previously prepared correspondence relationship, control corresponding to the control object is easily realized. The control is not limited to one that controls this ratio corresponding to a difference between the control object and the target value like feedback control. Various control methods, such as significantly changing or gradually decreasing this ratio according to the state of the control object, can be realized.

(5) In the above-described configurations of (1) to (4), the control unit may increment a change of the ratio of the first state or the second state in the determined ratio by a predetermined amount, when the electrical characteristic changes to exceed a predetermined value. Since this allows a change of the ratio to be incremented when a change of the electrical characteristic is large, further quick response can be expected. The incremented amount may be previously set experimentally or learned using results of feedforward control. Note that such a large change of the electrical characteristic may occur, for example, when the power receiving coil of the wireless power receiving device changes from in a state of being magnetically coupled with the power transmitting coil of one power transmitting device to in a state of being magnetically coupled with a plurality of power transmitting coils or when vice versa. The large change may also occur when a distance between the power receiving coil and the power transmitting coil abruptly changed due to, for example, existence of a step.

(6) In the above-described configurations of (1) to (5), the control unit may adjust a change of the ratio to a predetermined rate or less, when increasing a current supplied to the load. Since this allows an increase of a current to be a predetermined rate or less, overcharging when the load is a battery or like can be suppressed or prevented, or deterioration of EMC can be suppressed.

(7) In the above-described configurations of (1) to (6), a rectifier to rectify an output of the power unit may be included for supplying power to the load by a direct current after rectification by the rectifier. This is likely to accommodate a case in which the load is one that acts by a direct current. Of course, when the load is a device that acts by an alternating current, a configuration including no rectifier can be used. The rectifier may be either one that performs half-wave rectification or one that performs full-wave rectification. Further, the rectifier may be realized by a diode bridge, or the configuration of a synchronous rectifier may be adopted.

(8) In the above-described configurations of (1) to (7), the current switching unit may short-circuit an output line from the power unit such that the second current supplied to the load is zero. This can most widen a dynamic range that is the range of a current supplied to the load. Further, the circuit configuration can be simplified.

(9) In the above-described configurations of (1) to (8), a bridge-type synchronous rectifier to rectify an output of the power unit may be included, and the current switching unit may short-circuit the output line by simultaneously turning on two switching elements of the synchronous rectifier which are connected to one of power lines to the load. This allows for combined use of the configuration of a rectifier and a part of the configuration of a current switch and can simplify the circuit configuration. Note that the bridge-type rectifier may be configured that only one switching element is provided, and the others are diodes, so as to short-circuit output lines by turning on the switching element only in the cycle of one of half-waves constituting a full-wave.

(10) In the above-described configurations (1) to (9), the circuit having the immittance characteristic of the power unit may be an immittance filter, and the detection unit may be a voltage detection circuit that detects an input voltage of the immittance filter as the electrical characteristic. Since this allows the detection object to be a voltage, the configuration of the detection unit can be simplified. In the immittance filter, the output current and the input voltage are compatible, and the output current can be easily obtained from the input voltage. Of course, the control unit may directly perform the above-described feedforward control using an input voltage of the immittance filter of the power unit.

(11) In the above-described configurations of (1) to (10), a load current detection unit that detects a load current outputted to the load and a feedback control unit that feedback-controls a steady-state deviation from a target current value occurring in the load current due to the feedforward control may be included. This can reduce the steady-state deviation from the target current value occurring in the load current due to the feedforward control by feedback control. Note that such feedback control may be performed to the ratio of the first state or the second state which is the control object in feedforward control or may be performed to the second state or the first state which is reverse of the object to be feedforward-controlled.

(12) In the above-described configurations of (1) to (11), the load may include a battery capable of being charged with power, and an output voltage detection unit that detect an output voltage of the power unit and a feedback control unit that feedback-controls the ratio using the detected output voltage and a target voltage for charging the battery may be further included. Since this controls a current supplied to the load in feedforward control and controls the output voltage when charging a battery as the load in feedback control, interference between feedforward control and feedback control is unlikely to occur.

(13) The present disclosure includes a configuration as a wireless power transfer system. This wireless power transfer system includes the wireless power receiving device of any of the above-described (1) to (12) and a power transmitting device provided with a power transmitting coil to be magnetically coupled with the power receiving coil. This can quickly achieve control of power supply to the load in the wireless power receiving device and can enhance controllability as the wireless power transfer system. In this case, the number of power transmitting devices may be one, or may be two or more such that the power transmitting coils of the power transmitting devices to be magnetically coupled with the power receiving coil of the power receiving device are switched as an apparatus mounted with the power receiving device moves. The power transmitting coil only has to be disposed at a position where it can be magnetically coupled with the power receiving coil, and may be disposed to, for example, a road surface, a floor surface, a wall surface, or the like, when the power receiving device is mounted on an mobile object.

(14) The present disclosure includes a configuration as a wireless power receiving method corresponding to the configurations of the above-described (1) to (12). This wireless power receiving method includes: supplying at least a part of AC power received by a power receiving coil at a position where magnetic coupling with a power transmitting coil is possible, from a circuit that functions as a current source to a load; detecting an electrical characteristic of the current source in the circuit; and performing switching between a first state of supplying a first current from the current source to the load and a second state of supplying a second current smaller than the first current from the current source to the load, to feedforward-control a ratio of the first state or the second state to one cycle of the AC power according to the detected electrical characteristic. Since this allows the ratio of the first state or the second state to the alternating current cycle to be controlled by feedforward control according to the detected electrical characteristic, control of power supply to the load can be quickly realized.

(15) The present disclosure includes a configuration as a wireless power transfer method. This wireless power transfer method may include: applying AC voltage at a predetermined frequency to a power transmitting coil that is present at a position where magnetic coupling with a power receiving coil is possible; supplying at least a part of AC power received by the power receiving coil at a position where magnetic coupling with the power transmitting coil is possible, from a circuit that functions as a current source to a load; detecting an electrical characteristic of the current source in the circuit; and performing switching between a first state of supplying a first current from the current source to the load and a second state of supplying a second current smaller than the first current from the current source to the load, to feedforward-control a ratio of the first state or the second state to one cycle of the AC power according to the detected electrical characteristic. This can quickly achieve control of power supply to the load on the wireless power receiving side and can achieve a wireless power transfer method that achieves high controllability.

The control unit and the method therefor according to the present disclosure may be realized by a dedicated computer provided by constituting a processor programmed to execute one or a plurality of functions embodied by a computer program and a memory. Alternatively, the control unit and the method therefor according to the present disclosure may be realized by a dedicated computer provided by constituting a processor with one or more dedicated hardware logic circuits. Alternatively, the control unit and the method therefor according to the present disclosure may be realized by one or more dedicated computers constituted by a combination of a processor programmed to execute one or a plurality of functions and a memory and a processer constituted by one or more hardware logic circuits. The computer program may be stored as an instruction to be executed by a computer in a computer-readable non-transitory tangible memory medium. The "computer-readable non-transitory tangible memory medium" is not limited to a portable-type memory medium such as a flexible disk or a CD-ROM, and also includes an internal memory device in a computer, such as various RAMs and ROMs, and an external memory device fixed to a computer, such as a hard disk. That is, the "computer-readable non-transitory tangible memory medium" has a wide meaning including an optional memory medium capable of fixing a data packet not temporarily.

The present disclosure is not limited to the above-described embodiments, and can be realized in various configurations within the scope that does not depart from the spirit thereof. For example, technical features in embodiments corresponding to the technical features in forms described in Summary of the Invention can be appropriately replaced or combined in order to solve a part or the entirety of the above-described problems or in order to achieve a part or the entirety of the above-described effects. Further, the technical features can be appropriately deleted if not described as essential in this specification.

**Claims**

1. A wireless power receiving device (30, 30B to 30E, 30e, 30F) comprising:

   a power receiving unit (33) that includes a power receiving coil (31) and receives AC power by magnetic coupling;
   a power unit (40) that is connected to the power receiving unit and supplies, as a current source (331, 332, 333), power to a load;
   a detection unit (70) that detects an electrical characteristic of the power unit as the current source;
   a current switching unit (75, 75C) that switches the power unit between a first state of supplying a first current to the load and a second state of supplying a second current smaller than the first current to the load; and
   a control unit (71, 71e) that determines a ratio of the first state or the second state to a cycle of the AC power according to the detected electrical characteristic and feedforward-controls the current switching unit according to the ratio.

2. The wireless power receiving device according to claim 1, wherein the power unit includes a circuit having an immittance characteristic as the current source.

3. The wireless power receiving device according to claim 2, wherein the detection unit is a current detection circuit that detects the electrical characteristic using an output current of the circuit having the immittance characteristic.

4. The wireless power receiving device according to any one of claim 1 to claim 3, wherein the control unit

   previously prepares a correspondence relationship between the electrical characteristic and the ratio, and
   performs the feedforward control based on the detected electrical characteristic according to the ratio determined using the correspondence relationship.

5. The wireless power receiving device according to any one of claim 1 to claim 3, wherein when the electrical characteristic changes to exceed a predetermined value, the control unit increments a change of the ratio of the first state or the second state in the determined ratio by a predetermined amount.

6. The wireless power receiving device according to any one of claim 1 to claim 3, wherein when increasing a current supplied to the load, the control unit adjusts a change of the ratio to a predetermined rate or less.

7. The wireless power receiving device according to any one of claim 1 to claim 3, comprising a rectifier (44, 44C) to rectify an output of the power unit and supplying power to the load by a direct current after rectification by the rectifier.

8. The wireless power receiving device according to any one of claim 1 to claim 3, wherein the current switching unit short-circuits an output line (P1, P2) from the power unit so that the second current supplied to the load is zero.

9. The wireless power receiving device according to claim 8, comprising a bridge-type synchronous rectifier (44C) to rectify an output of the power unit, wherein the current switching unit short-circuits the output line by simultaneously turning on two switching elements (SW1, SW2) of the synchronous rectifier which are connected to one of power lines to the load.

10. The wireless power receiving device according to claim 2 or claim 3, wherein

    the circuit having the immittance characteristic of the power unit is an immittance filter, and
    the detection unit is a voltage detection circuit (32) that detects an input voltage of the immittance filter as the electrical characteristic.

11. The wireless power receiving device according to any one of claim 1 to claim 3, comprising:

    a load current detection unit (46) that detects a load current outputted to the load; and
    a feedback control unit that feedback-controls a steady-state deviation from a target current value occurring in the load current due to the feedforward control.

12. The wireless power receiving device according to any one of claim 1 to claim 3, wherein

    the load includes a battery capable of being charged with power, and

the wireless power receiving device further includes

an output voltage detection unit (47) that detects an output voltage of the power unit, and

a feedback control unit (76, 76e, 76F) that feedback-controls the ratio using the detected output voltage and a target voltage for charging the battery.

13. A wireless power transfer system (100), comprising:

the wireless power receiving device according to any one of claim 1 to claim 3, and

a power transmitting device (50) provided with a power transmitting coil (51) to be magnetically coupled with the power receiving coil.

14. A wireless power receiving method comprising:

supplying at least a part of AC power received by a power receiving coil at a position where magnetic coupling with a power transmitting coil is possible, from a circuit that functions as a current source to a load;

detecting an electrical characteristic of the current source in the circuit; and

performing switching between a first state of supplying a first current from the current source to the load and a second state of supplying a second current smaller than the first current from the current source to the load, to feedforward-control a ratio of the first state or the second state to one cycle of the AC power according to the detected electrical characteristic.

15. A wireless power transfer method comprising:

applying AC voltage at a predetermined frequency to a power transmitting coil that is present at a position where magnetic coupling with a power receiving coil is possible;

supplying at least a part of AC power received by the power receiving coil at a position where magnetic coupling with the power transmitting coil is possible, from a circuit that functions as a current source to a load;

detecting an electrical characteristic of the current source in the circuit; and

performing switching between a first state of supplying a first current from the current source to the load and a second state of supplying a second current smaller than the first current from the current source to the load, to feedforward-control a ratio of the first state or the second state to one cycle of the AC power according to the detected electrical characteristic.

# FIG.1

POWER RECEIVING DEVICE

POWER TRANSMITTING DEVICE 50

POWER TRANSMITTING DEVICE 50

POWER TRANSMITTING DEVICE 50

MAIN POWER SOURCE DEVICE

# FIG.2

# FIG.3

CONFIGURATION EXAMPLE 1

CONFIGURATION EXAMPLE 2

CONFIGURATION EXAMPLE 3

# FIG.4

WHEN POWER SWITCH IS OFF
POSITIVE HALF-CYCLE/
NEGATIVE HALF-CYCLE

WHEN POWER SWITCH IS ON
POSITIVE HALF-CYCLE/
NEGATIVE HALF-CYCLE

FIRST STATE (Pa/Pc)/SECOND STATE (Pb/Pd)

# FIG.5

# FIG.6A

T t : ONE CYCLE

# FIG.6B

OUTPUT CURRENT Iout

# FIG.7

# FIG.8A

# FIG.8B

# FIG.9A

# FIG.9B

```
        ┌─────────────────────────────────┐
        │   SYNCHRONOUS RECTIFIER CONTROL  │
        │      PROCESSING ROUTINE          │
        └─────────────────────────────────┘
                        │
                        ▼                S311
         Pa  ╱─────────────────────╲  Pc
        ◄────┤       SECTION ?      ├────►
             ╲─────────────────────╱
                        │ Pb, Pd
                        ▼
```

| S321 | S323 | S322 |
|------|------|------|
| TURN OFF SW1<br>TURN ON SW2 | TURN ON SW1<br>TURN ON SW2 | TURN ON SW1<br>TURN OFF SW2 |

```
                        ▼
                 ┌──────────────┐
                 │     NEXT     │
                 └──────────────┘
```

# FIG.10

$$Iout = V \times \frac{1}{Z0}$$

$$Z0 = \sqrt{\frac{L}{C}}$$

$$L = L11 + L12 = L21 + L22$$

$$C = Cim$$

# FIG.11

# FIG.12

# FIG.13

## INTERNATIONAL SEARCH REPORT

| International application No. |
|---|
| **PCT/JP2024/010700** |

**A.    CLASSIFICATION OF SUBJECT MATTER**

*H02J 50/10*(2016.01)i; *H02J 7/00*(2006.01)i; *H02J 50/40*(2016.01)i; *H02J 50/80*(2016.01)i
FI:    H02J50/10; H02J7/00 301D; H02J50/40; H02J50/80

According to International Patent Classification (IPC) or to both national classification and IPC

**B.    FIELDS SEARCHED**

Minimum documentation searched (classification system followed by classification symbols)

H02J50/00-50/90; H02J7/00-7/12; H02J7/34-7/36; B60L1/00-3/12; B60L7/00-13/00; B60L15/00-58/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | WO 2014/061217 A1 (ADVANTEST CORPORATION) 24 April 2014 (2014-04-24) entire text, all drawings | 1-15 |
| A | JP 2018-102054 A (SOKEN INC.) 28 June 2018 (2018-06-28) entire text, all drawings | 1-15 |
| A | WO 2019/017361 A1 (DENSO CORPORATION) 24 January 2019 (2019-01-24) entire text, all drawings | 1-15 |
| A | WO 2020/158559 A1 (DENSO CORPORATION) 06 August 2020 (2020-08-06) entire text, all drawings | 1-15 |
| A | EP 2985846 A1 (NXP B. V.) 17 February 2016 (2016-02-17) entire text, all drawings | 1-15 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **30 May 2024** | **11 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/010700**

| Patent document cited in search report | | | Publication date (day/month/year) | Patent family member(s) | | | Publication date (day/month/year) |
|---|---|---|---|---|---|---|---|
| WO | 2014/061217 | A1 | 24 April 2014 | US entire text, all drawings JP TW | 2015/0180287 2014-82897 201427225 | A1 A A | |
| JP | 2018-102054 | A | 28 June 2018 | (Family: none) | | | |
| WO | 2019/017361 | A1 | 24 January 2019 | US entire text, all drawings JP | 2020/0153342 2019-22378 | A1 A | |
| WO | 2020/158559 | A1 | 06 August 2020 | JP | 2020-127269 | A | |
| EP | 2985846 | A1 | 17 February 2016 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023055505 A
- WO 2020129178 A